Europäisches Patentamt

European Patent Office

Office européen des brevets

(11) Publication number: **0 227 835**
A1

# EUROPEAN PATENT APPLICATION

published in accordance with Art. 158(3) EPC

(21) Application number: 86903592.3

(22) Date of filing: 11.06.86

Data of the international appli-
cation taken as a basis:

(86) International application number:
PCT/JP 86/00291

(87) International publication number:
WO 86/07299 (18.12.86 86/27)

(51) Int. Cl.⁴: **B 25 J 19/00**

(30) Priority: 11.06.85 JP 126878/85

(43) Date of publication of application: 08.07.87
Bulletin 87/28

(84) Designated Contracting States: DE FR GB

(71) Applicant: FANUC LTD, 3580, Shibokusa Aza-Komanba
Oshino-mura, Minamitsuru-gun Yamanashi 401-05 (JP)

(72) Inventor: KURAKAKE, Mitsuo Izumi-Haitsu 103, 3-10,
Tamadaira 3-chome Hino-shi, Tokyo 191 (JP)

(74) Representative: Billington, Lawrence Emlyn et al,
HASELTINE LAKE & CO Hazlitt House 28 Southampton
Buildings Chancery Lane, London WC2A 1AT (GB)

(54) **ROBOT CONTROLLER.**

(57) Optical fiber cables connect a robot controller, and the
robot controller to a numerical controller which controls the
robot controller. Photoelectric transducers are provided at
the ends of the optical fiber cables to transmit the data
therebetween through optical media. Therefore, even if the
optical cables run close to cables of a power system, the
signal system does not pick up electric noise leaked from
the power system cables. The signal system does not, ei-
ther, pick up intense electric noise transmitted from units
other than the robot equipment. Therefore, the robot is free
from any malfunction due to such noise.

# DESCRIPTION

## ROBOT CONTROL APPARATUS

### Technical Field

This invention relates to a robot control apparatus using optical fiber cables as control lines.

### Background Art

An industrial robot grasps a workpiece by means of a hand provided at the distal end of an arm extending from a robot mechanism or subjects a workpiece to machining such as welding by a tool such as a torch mounted at the distal end of the arm. Ordinarily, a motion command is issued by a numerical control (NC) unit within a control unit installed remote from the robot mechanism, and servomotor power from a magnetics panel within the control unit is delivered to the robot mechanism through a cable on the basis of the motion command. In addition, a cable is provided between the robot mechanism and the control unit for delivering a brake drive signal and signals from various sensors provided on the hand to the control unit, and a cable is provided between the robot mechanism and control unit for delivering signals from limiter switches, which are for limiting the operating range of each axis constituting the robot mechanism, to the control unit.

In a conventional industrial robot of the above kind, electric signals are used not only for the servomotor power but also for the limiter switch signals of the respective axes, which limiter switches are for protecting the robot. Since the cables usually are arranged close together from the control unit to the robot mechanism, an electrical noise component contained in the servomotor power mixes in with the limiter switch signals, as a result of which the robot unit may malfunction. This effect becomes quite pronounced because the power and signal cables are packed closely together particularly within the narrow arm of the robot unit.

The present invention is for solving the aforementioned problems of the prior art and its object is to provide a robot control apparatus capable of preventing the mixing in of an external noise component from signal lines.

Another object of the present invention is to provide a robot control apparatus in which data free of electrical noise can be transmitted between the main frame of the control unit and the a robot mechanism.

Disclosure of the Invention

The present invention solves the aforementioned problems of the conventional apparatus by providing a robot control apparatus for controlling a robot by a light signal, the apparatus comprising a robot having an arm, a first photoelectric converter provided at a junction between a distal end of the robot arm and a hand provided on the distal end, a control apparatus main frame for controlling the robot, a second photo-electric converter provided in the control apparatus main frame, and optical fiber cables joining the first and second photoelectric converters, wherein data is transmitted between the first and second photoelectric converters by the optical cables, and further, by providing a robot control apparatus for controlling a robot by a light signal, the apparatus comprising a robot having an arm, a first photoelectric converter provided at a junction between a distal end of the robot arm and a hand provided on the distal end, a robot control apparatus main frame for controlling the robot, a numerical control unit for controlling the control apparatus main frame, a second photoelectric converter provided in the robot control apparatus main frame for communicating with the robot, a third photoelectric converter provided in the robot control apparatus main frame for communicating with the numerical control unit, a fourth photoelectric converter provided in the numerical control unit for communicating with the robot control apparatus main frame, optical fiber cables joining the first and second photoelectric converters, and optical fiber cables joining the third and fourth photoelectric converters, wherein data is transmitted between the first and second photoelectric converters and between the third and fourth photoelectric converters by the optical cables.

Brief Description of the Drawings

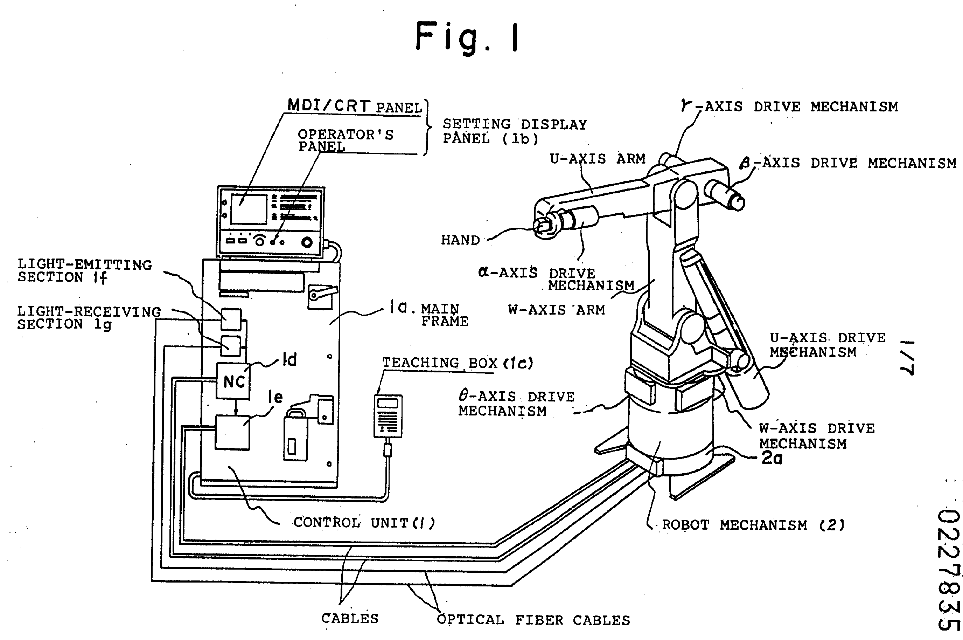

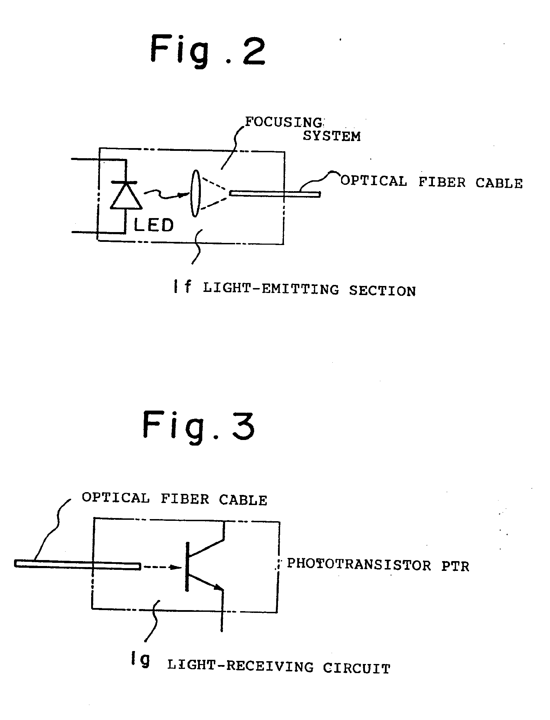

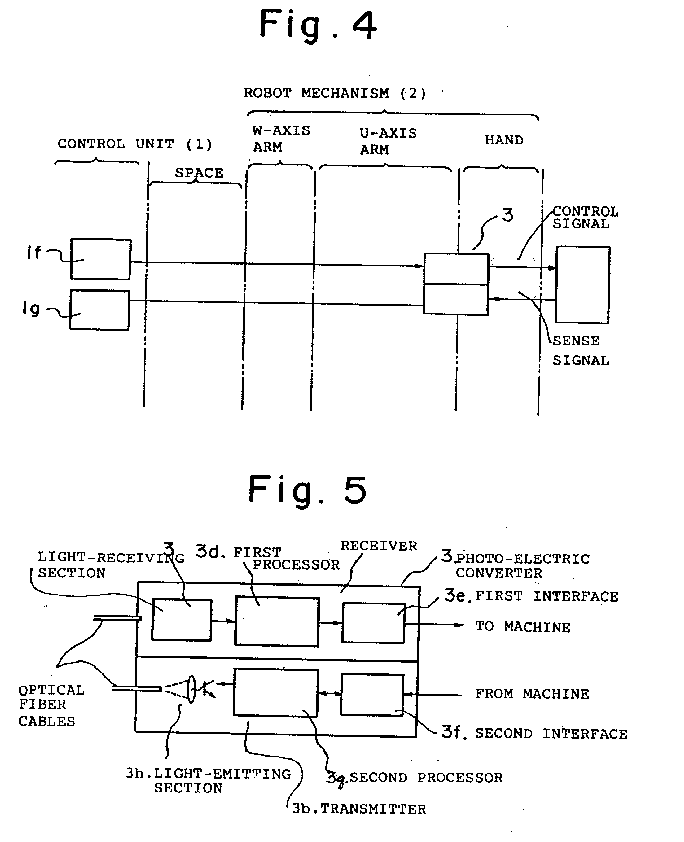

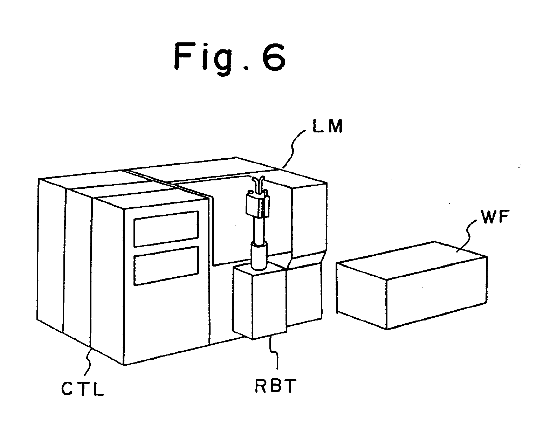

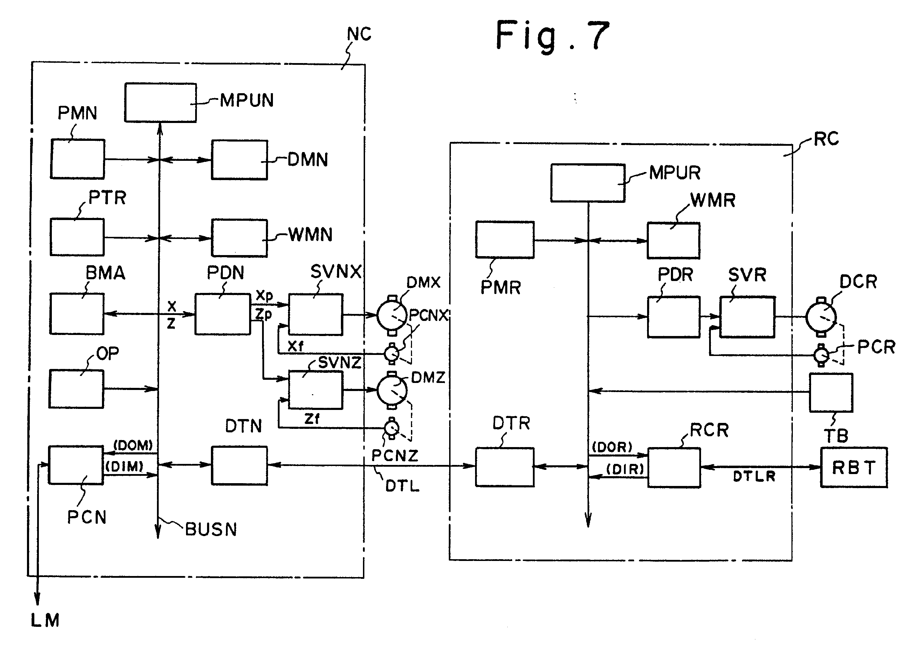

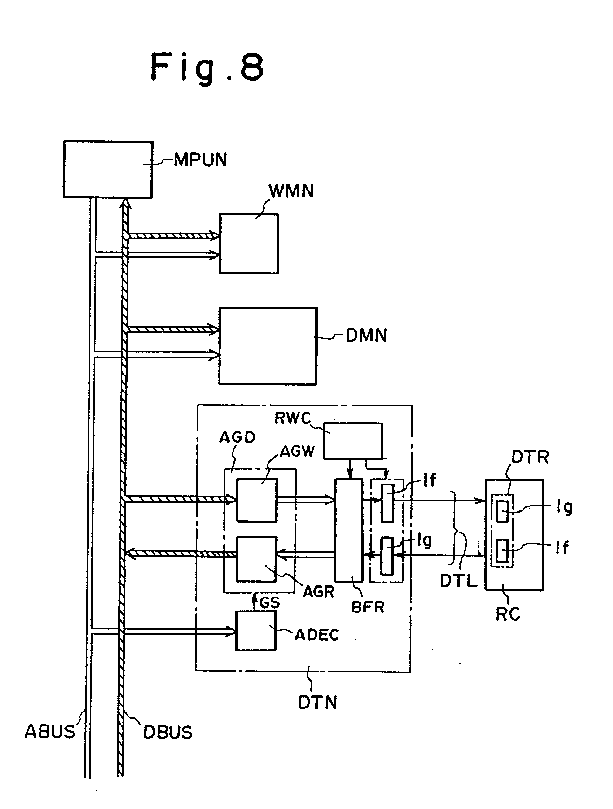

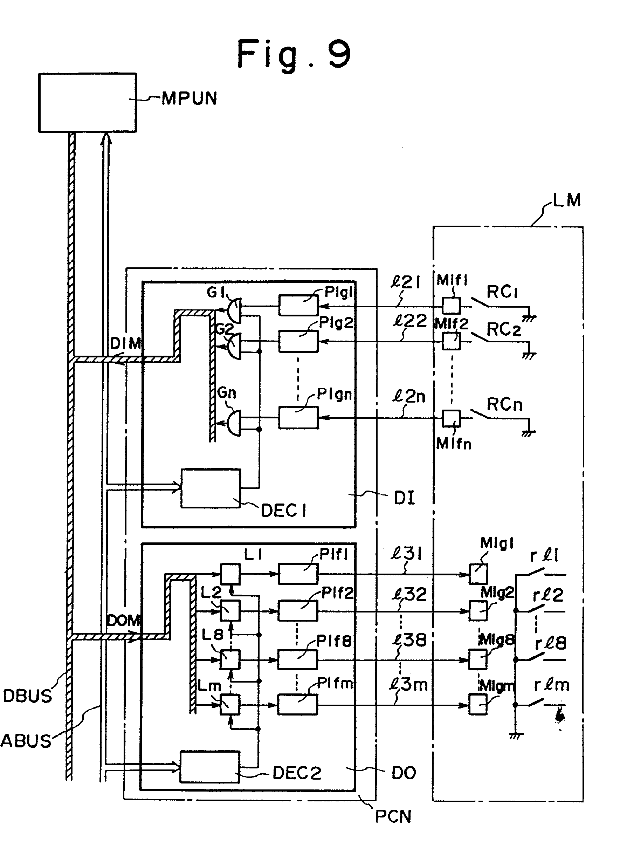

Fig. 1 is a view showing the construction of an industrial robot which includes a robot control apparatus according to the present invention, Fig. 2 is a view showing the construction of a light-emitting section, Fig. 3 is a view showing the construction of a light-receiving section, Fig. 4 is a view of an optical signal system, Fig. 5 is a block diagram of a photo-electric converter, Fig. 6 is a perspective view showing a second embodiment, Fig. 7 is a block diagram showing the second embodiment, Fig. 8 is a block diagram for describing the exchange of data between two data transceivers, and Fig. 9 is a block diagram for describing the exchange of data between a magnetics circuit and a lathe.

Best Mode for Carrying Out the Invention

An embodiment of the present invention will now be described in detail.

Fig. 1 is a view showing the construction of an industrial robot which includes a robot control apparatus according to the present invention.

In Figure 1, numeral 1 denotes a control unit having a main frame 1a on the upper portion of which is arranged a setting display panel 1b comprising an MDI/CRT panel having a manual input and indicator lamps, and a control panel. Provided therebelow is a teaching pendant 1c. Provided within the main frame 1a are a controller 1d comprising a numerical control (NC) unit, a magnetics panel 1e for motor control and the like, as well as a light-emitting section 1f for

sending optical signals to a variety of mechanisms provided on the hand at the distal end of an arm of a robot mechanism, described below, and a light-receiving section 1g for receiving optical signals from various mechanisms provided on the distal end of the hand. As shown in Fig. 2, the light-emitting section 1f comprises a light-emitting diode LED and a focusing system for leading the light emitted by the diode into an optical fiber cable. The light-emitting diode LED is switched on and off in response to a command signal from the NC unit to generate an optical pulse signal introduced to the optical cable. As shown in Fig. 3, the light-receiving section 1g comprises an optical fiber cable and a phototransistor PTR. The phototransistor PTR, which is turned on or off depending upon whether light is received from the optical fiber cable, produces a variety of electric signals sent to the controller 1d. It should be noted that the light-emitting section 1f and light-receiving section 1g construct a photoelectric converter on the side of the control apparatus 1. The two optical fiber cables connected to the light-emitting section 1f and light-receiving section 1g lead to a robot mechanism 2.

The robot mechanism 2 has a pedestal 2a secured to the floor. Provided on the pedestal 2a are a $\theta$-axis drive mechanism, W-axis drive mechanism, U-axis drive mechanism and $\alpha$-, $\beta$- and $\gamma$-axis drive mechanisms, as well as a U-axis arm and W-axis arm driven by the U-axis and W-axis drive mechanisms. A hand is provided at the distal end of the U axis. Though not shown, devices such as a welding torch, position observing camera and the like are mounted on the distal end of the hand. All of the above are operated in response to commands from the NC unit.

As shown in Fig. 4, the optical fiber cables leading to the robot mechanism 2 reach the distal end of the U-axis arm upon being passed through the W-axis arm and U-axis arm. Provided on the distal end of the optical fiber cable led into the end of the U axis is a photoelectric converter 3 having a receiving section 3a for receiving optical signals and a transmitting section 3b for transmitting optical signals to the side of the control apparatus 1. As shown in Fig. 5, the receiving section 3a constituting the photoelectric converter 3 has a light receiver 3c for converting an optical signal received from the optical fiber cable into an electrical signal, a first processor 3d including an S-P converter comprising a buffer register for converting a serial signal, electrically converted by the light receiver 3c, into a parallel signal, a multiplexer and a digital/analog (D/A) converter, and a first interface 3e for transmitting a signal from the first processor 3d to a machine side provided in the robot mechanism 2. As shown in Fig. 5, the transmitting section 3b constituting the photoelectric converter 3 includes a second interface 3f which receives various signals such as sense signals from the machine side, a second processor 3g including a multiplexer and an analog/digital (A/D) converter, and a light transmitter 3h for converting an electric signal from the second processor 3g into an optical signal and for transmitting the optical signal to the optical fiber cable.

The operation of the invention will now be described. An electrical signal produced by the control apparatus 1 is converted into an optical signal by the photoelectric converter formed on the side of the control apparatus 1 by the light-emitting section 1f and light-receiving section 1g. The optical signal reaches the photoelectric converter 3 via the optical fiber cable. This signal is reconverted into an electrical signal by the photoelectric converter 3 before being applied to the equipment mounted on the hand provided on the distal end of the robot arm. An electrical signal such as a sense signal generated by the equipment mounted on the hand provided on the end of the arm is converted into an optical signal by the photoelectric converter 3 before being sent via the optical fiber cable to the photoelectric converter formed on the side of the control apparatus 1 by the light-emitting section 1f and light-receiving section 1g. This signal is reconverted into an electrical signal by this photoelectric converter before being sent to the controller 1d.

In the above-described embodiment, the robot control apparatus according to the present invention is provided solely for the robot wrist portion. However, the invention is not limited to the foregoing embodiment, for such a mechanism can be provided for e.g. a machine tool system using a robot or for all articulated portions of a robot. Furthermore, it is not required to provide solely a single system of the photoelectric converters, as in the aforementioned embodiment. It goes without saying that plural systems of the converters may be provided if necessary.

Fig. 6 illustrates an embodiment in which the present invention is applied to a machine tool equipped with a robot.

In the Figure, LM represents a lathe. RBT denotes a robot belonging to the lathe LM for executing such services as the carrying in and out of workpieces for the lathe LM, the changing of tools, the cleaning of cutting scraps and the like. CTL represents a control apparatus locker housing the lathe LM, a numerical control unit, described below, for controlling the robot belonging to the lathe, and a robot control apparatus, described below, for directly controlling the robot RBT. WP designates a workpiece feeder for feeding workpieces that have not yet been machined.

Fig. 7 is a circuit block diagram for realizing this embodiment.

In Fig. 7, BUSN denotes a bus line having an address bus for transferring an address signal and a data bus for transferring data. WMN represents a working memory comprising a high-speed, small-capacity, non-volatile RAM for temporarily storing machining data read out of a non-volatile data memory DMN. PWN denotes a control program memory storing a control program, and MPUN denotes a processing unit such as a microprocessor for executing various processing, such as numerical control processing, editing processing and data transceiving processing, on the basis of the control program and machining data. PDN is a pulse distributor which receives position commands X, Z as inputs for executing well-known pulse distribution calculations to distribute pulses Xp, Zp. SVNX, SVNZ represent servo-control circuits for the lathe LM. The circuits SVNX, SVNZ, which receive as inputs the distributed pulses Xp, Zp and feedback pulses Xf, Zf generated whenever motors rotate by a predetermined amount, generate analog voltages proportional to $|Xp-Xf|$, $|Zp-Zf|$, respectively. DMX, DMZ denote DC motors for X- and Z-axis drive, respectively, and PCNX, PCNZ represent pulse coders mounted on the shafts of the respective DC motors DMX, DMZ for generating the feedback signals Xf, Zf whenever the respective motors rotate by the predetermined amount. The servo-circuits SVNX, SVNZ, DC motors DMX, DMZ and pulse coders CNX, PCNZ construct a servo unit for performing servo-control in such a manner that $|Xp-Xf|$, $|Zp-Zf|$ both

become zero. BMA denotes a bubble memory adapter for reading the machining program stored in a bubble memory cassette and for transferring the program to the working memory WMN. PCN designates a magnetics circuit for the exchange of signals between the lathe LM and numerical control unit NC. OP is an operator's panel, and DTN denotes a data transceiver which, as shown in Fig. 8, incorporates the light-transmitting section 1f, light-receiving circuit 1g and a buffer register. Though the details will be described below, the data transceiver DTN performs an exchange of data, by means of light, with a robot control apparatus RC on the basis of control exercised by the processor MPUN.

In the robot control apparatus RC, PMR denotes a control program memory for storing a control program. Designated at MPUR is a processor such as a microprocessor for executing e.g. robot control processing and processing for the sending and receiving of data on the basis of a robot command program and the control program. PDR denotes a pulse distributor, SVR a servo-circuit, DCR a DC motor for transporting the robot arm, and PCR a pulse coder. These components construct a servo unit which executes servo control in such a manner that the difference between the number of distributed pulses and the number of feedback pulses will become zero, just as in the circuitry of the lathe LM. In order to simplify the block diagram, only one servo unit is shown in Fig. 7. However, it goes without saying that the number of such servo units provided is equivalent to the number of robot articulations.

DTR designates a data transceiver for communicating with the numerical control unit NC. The data transceiver DTR is connected to the data transceiver DTN of the numerical control unit NC via a data transfer line DTL consisting of an optical fiber cable, whereby data are exchanged by the transceivers in the form of light. As in the data transceiver DTN of the numerical control unit NC, the data transceiver DTR incorporates the light-emitting section 1f, light-receiving circuit 1g and buffer register. RCR designates a data transceiver having the light-emitting section 1f and light-receiving circuit 1g for communicating with the robot. The data transceiver RCR is connected to the robot via a data transfer line DTLR using an optical fiber cable for exchanging data with the robot in the form of light. TB denotes a teaching box for teaching robot motion. It should be noted that the data transceiver RCR and robot RBT are constructed as in the first embodiment, and that the communication between them take place as in the first embodiment. A detailed description is therefore omitted.

Fig. 8 is a block diagram of the data transceiver DTN, which is shown in association with the processor MPUN. In Fig. 8, ADEC denotes a decoder for decoding an address signal received from the processor MPUN via the address bus ABUS. If the address signal has the address assigned to the data transceiver DTN, then the decoder opens write AND gates or read AND gates of a gating circuit. AGD represents the gating circuit having a plurality of write gates AGW and read gates AGR. The write gates AGW or read gates AGR are opened by a gate signal GS from the decoder circuit ADEC, whereby parallel data received from the processor MPUN via the data bus DBUS are stored in a buffer register, described below, or data stored in the buffer register are outputted to the data bus DBUS. BFR denotes the buffer register in which data can be written and from which data can be read in parallel fashion, and in which data can be written and from which data can be read serially one bit at a time. The data read out of the BFR are transmitted to the light-emitting section lf, which converts the data into serial light pulses delivered to the robot control apparatus RC. Serial light pulses from the robot control apparatus RC are received by the light-receiving circuit lg, which converts these pulses into serial electrical pulses that are then stored in the buffer register BFR. RWC designates a read/write control circuit for controlling the writing or reading of parallel or serial data with respect to the buffer register BFR, and for controlling the light-emitting section lf and light-receiving circuit lg. DTL denotes a full-duplex data transmission line comprising optical fiber cables connecting the data transceiver DTN and robot control apparatus RC.

In Fig. 8, the processor MPUN transfers robot command data stored in the data memory DMN to the robot control apparatus RC in the following manner: First, one byte of robot command data to be transmitted is read out of the data memory DMN and stored in the working memory WMN.

Next, the address of the write gate AGW is sent out on the address bus ABUS, and the single byte of robot command data stored in the working memory WMN is sent out on the data bus DBUS. The address signal is decoded by the decoder ADEC, which opens the write gate AGW based on the decoded results. The robot command data sent out on the data bus DBUS are thus written into the buffer register BFR in parallel fashion under the control of the read/write control circuit RWC. When the robot command data have be stored in the buffer register BFR, the read/write control circuit RWC reads one byte of the robot command data bit by bit and sends the bit serial to the robot control apparatus RC via the light-emitting section lf and data transfer line DTL. The robot command data are sent to the robot control apparatus RC successively thereafter in similar fashion.

Robot command data transmitted by the robot control apparatus RC in the form of light are stored in the data memory DMN in the following manner: Robot command data transmitted by the robot control apparatus RC one bit at a time in the form of a bit serial are converted from light pulses to electrical pulses under the control of the read/write control circuit RWC. Once this has been done, the electrical pulses are stored in the buffer register BFR in serial fashion. Meanwhile, the processor MPUN synchronously generates the address of the read gate AGR. Accordingly, the read gate AGR opens when this address is decoded by the decoder ADEC. As a result, the byte of robot command data stored in the buffer register BFR is sent out on the data bus DBUS to be temporarily stored in the working memory WMN. Thereafter, the robot command data are written in the data memory DMN under the control of the processor MPUN. The robot command data are stored in the data memory DMN successively thereafter by the same operation.

It should be noted that the data transceiver DTR of the robot control apparatus RC has substantially the same construction as the data transceiver DTN on the side of the numerical control unit NC, and that the exchange of data is performed in substantially the same way as on the side of the numerical control unit NC. A detailed description of the operation thereof is omitted for this reason.

The magnetics circuit PCN interfaces the numerical control unit NC and lathe LM. More specifically, the magnetics circuit PCN outputs a signal DOM, such as a miscellaneous function (M function) instruction or spindle rotation (S function) instruction, to the lathe side as contact signal. When the activity corresponding to the miscellaneous function instruction or spindle rotation instruction ends on the lathe side, the magnetics circuit outputs a completion signal or the like to the bus line in the form of a contact signal.

Fig. 9 is a block diagram for describing the exchange of data between the lathe and the numerical control unit.

In the Figure, DI represents a data input circuit having light-receiving circuits Plg1 - Pln which receive optical signals, obtained by a conversion, which is performed by light-emitting sections Mlf1, Mlf2 - Flf1, of various limit signals from the lathe LM and signals from relay contacts, AND gate circuits G1 - Gn, and a decoder DEC1 for decoding an address signal to open prescribed ones of the AND gates.

DO represents a data output circuit having a number of latch circuits L1 = Lm for storing a BCD two-digit (eight bit) M-function instruction, a BCD two-bit S-function instruction, a BCD two-digit T-function instruction and the like, light-emitting sections Plf1, Plf2 - Plfm provided for corresponding ones of the latch circuits L1 - Lm for the purpose of sending the output signals of the latches to respective light-receiving circuits Mlg1 - Mlgm on the side of the lathe LM in the form of optical signals, and a decoder DEC2 for decoding an address signal so that prescribed ones of the lathes can be set/reset. Further, $l21$ - $l2n$, $l31$ - $l3m$ denote optical fiber cables connecting the magnetics circuit PCN and lathe LM for the exchange of data that have been converted into light signals. RC1 - RCn represent e.g. switch contacts opened and closed by an actuating member (not shown) of the lathe LM. In addition, $rl1$ - $rlm$ designate relays actuated when corresponding light-emitting sections M1f1, M1f2 - M1fm receive data from the magnetics circuit PCN. When actuated, these relays generate switching signals for e.g. opening and closing the door of the lathe LM. In accordance with the second embodiment of the invention as set forth above, the numerical control unit NC and lathe LM, the numerical control unit and robot control apparatus, and the robot control apparatus and robot are connected by optical fiber cables so that it is possible to exchange data by means of light.

Industrial Applicability

According to the invention, signals sent to and received from a mechanism provided at the end of a robot hand or signals exchanged by a numerical control unit and robot control apparatus are sent and received by optical fiber cables. As a result, an electrical noise component contained in the servomotor power does mix with limiter signals, thereby preventing robot malfunction.

-17-

CLAIMS:

1.  A robot control apparatus for controlling a robot by an optical signal, comprising:

a robot having an arm;

a first photoelectric converter provided at a junction between a distal end of the robot arm and a hand provided on the distal end;

a control apparatus main frame for controlling said robot;

a second photoelectric converter provided in said control apparatus main frame; and

optical fiber cables joining the first and second photoelectric converters.

2.  A robot control apparatus according to claim 1, characterized in that said first and second photoelectric converters each have a plurality of photoelectric converting elements.

3.  A robot control apparatus for controlling a robot by an optical signal, comprising:

a robot having an arm;

a first photoelectric converter provided at a junction between a distal end of the robot arm and a hand provided on the distal end;

a robot control apparatus main frame for controlling said robot;

a numerical control unit for controlling said control apparatus main frame;

a second photoelectric converter provided in said robot control apparatus main frame for communicating with the robot;

a third photoelectric converter provided in said robot control apparatus main frame for communicating with the numerical control unit;

a fourth photoelectric converter provided in said numerical control unit for communicating with the robot control apparatus main frame;

optical fiber cables joining the first and second photoelectric converters; and

optical fiber cables joining the third and fourth photoelectric converters.

4. A robot control apparatus according to claim 3, characterized in that said first, second and third photo-electric converters each have a plurality of photoelectric converting elements.

5. A robot control apparatus according to claim 4, characterized in that the numerical control unit and a machine tool controlled thereby are joined by optical fiber cables and data are exchanged by the numerical control unit and machine tool in the form of optical signals.

Fig. 1

# Fig.2

FOCUSING SYSTEM

OPTICAL FIBER CABLE

LED

lf LIGHT-EMITTING SECTION

# Fig.3

OPTICAL FIBER CABLE

PHOTOTRANSISTOR PTR

lg LIGHT-RECEIVING CIRCUIT

0227835

# Fig. 4

ROBOT MECHANISM (2)

CONTROL UNIT (1)

SPACE

W-AXIS ARM

U-AXIS ARM

HAND

If

Ig

3

CONTROL SIGNAL

SENSE SIGNAL

# Fig. 5

LIGHT-RECEIVING SECTION

3 3d. FIRST PROCESSOR

RECEIVER

3 PHOTO-ELECTRIC CONVERTER

3e. FIRST INTERFACE

TO MACHINE

OPTICAL FIBER CABLES

FROM MACHINE

3f. SECOND INTERFACE

3h. LIGHT-EMITTING SECTION

3g. SECOND PROCESSOR

3b. TRANSMITTER

# Fig.6

Fig.7

5/7

0227835

# Fig.8

0227335

## Fig. 9

# INTERNATIONAL SEARCH REPORT

0227835

International Application No. PCT/JP86/00291

## I. CLASSIFICATION OF SUBJECT MATTER (if several classification symbols apply, indicate all) 3

According to International Patent Classification (IPC) or to both National Classification and IPC

Int.Cl$^4$  B25J19/00

## II. FIELDS SEARCHED

### Minimum Documentation Searched 4

| Classification System | Classification Symbols |
|---|---|
| IPC | B25J19/00—19/06 |

### Documentation Searched other than Minimum Documentation to the Extent that such Documents are Included in the Fields Searched 5

| | |
|---|---|
| Jitsuyo Shinan Koho | 1965 — 1985 |
| Kokai Jitsuyo Shinan Koho | 1971 — 1985 |

## III. DOCUMENTS CONSIDERED TO BE RELEVANT 14

| Category* | Citation of Document, 16 with indication, where appropriate, of the relevant passages 17 | Relevant to Claim No. 18 |
|---|---|---|
| X | JP, A, 60-5644 (Sumitomo Electric Industries, Ltd.) 12 January 1985 (12. 01. 85) (Family: none) | 1 - 5 |
| Y | JP, A, 59-166497 (Mitsubishi Electric Corporation) 19 September 1984 (19. 09. 84) (Family: none) | 1 - 5 |
| Y | JP, B2, 59-18194 (Fanuc Ltd.) 25 April 1984 (25. 04. 84) & DE, A1, 2,903,184 & GB, A, 2,013,368 & FR, A1, 2,416,088 & US, A, 4,250,178 | 5 |
| Y | JP, A, 54-131240 (Hitachi, Ltd.) 12 October 1979 (12. 10. 79) (Family: none) | 1 - 4 |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 2 | Date of Mailing of this International Search Report 2 |
|---|---|
| August 26, 1986 (26. 08. 86) | September 8, 1986 (08. 09. 86) |
| International Searching Authority 1 | Signature of Authorized Officer 20 |
| Japanese Patent Office | |

Form PCT/ISA/210 (second sheet) (October 1981)